# EUROPEAN PATENT SPECIFICATION

(11) **EP 4 029 708 B1**
(45) Date of publication and mention of the grant of the patent: **19.06.2024**
(21) Application number: 22151634.7
(22) Date of filing: 14.01.2022
(51) Int. Cl.: B60H 1/00, B60K 35/00, B60K 37/06

(54) **CONTROL SYSTEM OF THE AIR CONDITIONING OF A CABIN OF A VEHICLE**
KONTROLLSYSTEM DER KLIMATISIERUNG EINER KABINE EINES FAHRZEUGS
SYSTÈME DE CONTRÔLE DE LA CLIMATISATION D'UNE CABINE D'UN VÉHICULE

(30) Priority: 14.01.2021 IT 202100000596
(43) Date of publication of application: 20.07.2022
(73) Proprietor: IVECO S.P.A., 10156 Torino (IT)
(72) Inventor: UCCHEDDU, Davide, 10073 Ciriè (TO) (IT)
(74) Representative: Studio Torta S.p.A.

(56) References cited:
- CN-B- 106 114 126
- FR-A1- 2 773 117
- JP-A- 2006 264 636
- US-A1- 2009 084 220

## Description

### TECHNICAL FIELD

The invention relates to a vehicle comprising a cabin provided with a control system for managing the conditioning of said cabin.

### KNOWN STATE OF THE ART

Heavy vehicles, such as trucks, are normally provided with a cabin, which must be designed so as to allow drivers to fulfil travel tasks, which include driving on a road as well as refreshment breaks, with utmost comfort.

One of the aspect that requires a particularly careful designing is the control of the conditioning system. Indeed, in some environmental conditions, for example in winter or summer, a strong conditioning of the cabin is necessary in order to ensure a correct comfort.

To this aim, control system are known, which are normally obtained on the dashboard of the vehicle and comprise rotating knobs, displays and buttons configured to transmit a control signal to a control unit of the conditioning systems.

These systems currently are extremely bulky in order to define a wide range of control elements or, if they are compact, clearly are scarcely versatile. Moreover, merely digital controls, for example from a screen, are very expensive and need a re-designing of the spaces of the dashboard.

Examples of known system in the art are disclosed in CN106114126 B, US2009084220 A1, JP2006264636 A1 or FR2773117 A1.

Therefore, systems for controlling the conditioning system of a vehicle cabin are needed, which are compact and versatile.

The object of the invention is to fulfil the needs discussed above in an optimized and economic fashion.

### SUMMARY OF THE INVENTION

The aforesaid object is reached by a vehicle according to the appended independent claim 1.

Further preferred embodiments of the invention are described in the dependent claims.

### BRIEF DESCRIPTION OF THE DRAWINGS

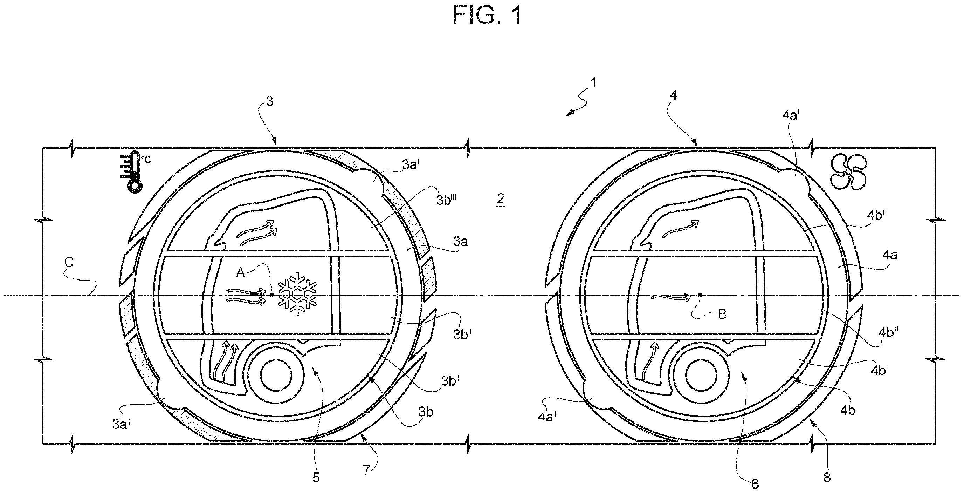

The invention will be best understood upon perusal of the following detailed description of a preferred embodiment, which is provided by way of non-limiting example, with reference to the accompanying drawing, figure 1, schematically showing a system of a vehicle according to the invention.

### DETAILED DESCRIPTION OF THE INVENTION

In figure 1, number 1 generally indicates a system for controlling the conditioning of a cabin of a heavy vehicle.

The control system 1 can be integrated in a dashboard 2 inside the cabin (which is not shown herein) of the heavy vehicle or in any inner portion of the cabin deemed to be comfortable for the use of the driver of the vehicle.

Preferably, the control system 1 comprises one single pair of mechanical knob regulators 3, 4 next to one another and spaced apart from one another at a distance that is approximately equal to the one of the mechanical knob regulators 3, 4. Said distance preferably is circa 50 mm.

In particular, each mechanical knob regulator 3, 4 comprises a central portion 3b and an annular portion 3a, 4a, which can rotate around the central portion 3b, 4b. In particular, the central portion 3b, 4b has a cylindrical shape and, hence, extends from the dashboard 2 towards the inside of the cabin and defines a circular lateral surface centred on a respective axis A, B, around which the respective annular portion 3a, 4a can slide in a circumferential manner.

Preferably, the two central portions 3b, 4b are arranged so that the axes A, B intersect a same straight line C.

More in detail, each central portion 3b, 4b is divided into at least a pair of portions configured to be selectively pressed by the driver of the vehicle like buttons in order to select different functions, as discussed below.

More in detail, in the embodiment described herein, each central portion 3b, 4b is divided into three portions 3b', 3b", 3b‴, 4b', 4b'', 4b‴ vertically arranged on top of one another, i.e. placed on one another in a direction perpendicular to the straight line C.

Preferably, each annular portion further defines at least one indicator portion 3a', 4a' configured to be integral to the annular portion 3a, 4a so as to indicate an angular position thereof relative to the central portion 3b, 4b.

More in detail, said indicator portion 3a', 4a' can comprise a projection, which is manufactured as one single piece together with the annular portion 3a, 4a and radially extends from the latter on the opposite side relative to the central portion 3b, 4b.

In the embodiment described herein, each annular portion 3a, 4a comprises two projections, which are diametrically opposite one another.

The control system 1 further comprises a plurality of graphic signs 5, 6, 7, 8 made on the dashboard 2 and/or on the mechanical knob regulators 3, 4 and representing different functions that can be adjusted by means of the mechanical knob regulators 3, 4.

In particular, each mechanical knob regulator 3, 4 defines, on the respective central portion 3b, 4b, a graphic sign 5, 6 representing, in a shaped manner, the specific shape of the cabin of the vehicle equipped with the control system 1.

As a consequence of the description above, the graphic sign 5, 6 is divided into three portions representing as many areas/functions that can be activated by having the driver press the relative portion 3b', 3b'', 3b''', 4b', 4b", 4b‴.

More in detail, further graphic signs 7, 8 are provided around each annular portion 3a, 4a basically defining a circular crown that can have different colours or thicknesses in order to represent temperatures and/or intensities of the signal that can be controlled through the rotation of the annular portion 3a, 4a.

More in detail, a first mechanical knob regulator 3 is configured to control the temperature value inside the cabin of the vehicle and a second mechanical knob regulator 4 is configured to adjust the intensity of the air flow supplied into the cabin of the vehicle.

Preferably, the portions 4b', 4b", 4b‴ of the second mechanical knob regulator 4 can be selected in combination with one another and enable the activation of the ventilation in the cabin portion represented by the graphic sign 6, i.e., with reference to figure 1, the lower, central and upper portion of the cabin.

Preferably, the portions 3b', 3b", 3b" ' of the first mechanical knob regulator 3 can only be selected alternatively to one another and enable the activation of the special thermal functions in the cabin portion represented by the graphic sign 5. In particular and by way of example, these special thermal functions can comprise:
A. A maximum heating of the lower part of the cabin;
B. A maximum cooling of the central part of the cabin; or
C. A maximum heating of the upper part of the cabin.

In particular and by way of example, the aforesaid functions A, B and C can be carried out as shown in the table below:

| **Function** | **Temperature** | **Speed** | **Distribution** | **Compressor** | **Recirculation** |
|---|---|---|---|---|---|
| A | Maximum | maximum | Cabin lower part | On | On |
| B | Minimum | maximum | Cabin central part | On | On |
| C | Maximum | maximum | Cabin upper part | On | Off |

Optionally, if they are pressed when the vehicle is parked, one or more of the portions 3b', 3b", 3b‴ of the first mechanical knob regulator 3 can be selected in order to control the conditioning of the cabin when the vehicle is parked, thus subjecting the cabin to the so-called park cooling or park heating functions.

Clearly, the rotation of the annular portions 3a, 4a or the pressing of one of the portions 3b' , 3b", 3b‴, 4b', 4b", 4b‴ generates an electric signal that can be acquired by a control unit of the cabin conditioning system, which comprises electronic means configured to control the flow rate, the direction and the temperature of the air conditioning flow accordingly.

The embodiment of the control system 1 described above works as follows.

Users can manage the area and the flow rate of the air flow through the second mechanical knob regulator 4 as well as manage the temperature of said air flow through the first mechanical knob regulator 3. In particular, the intensity of the flow/temperature is adjusted through the rotation of the annular portions 3a, 4a on the respective central portion 3b, 4b, visually checking the position of the indicator portion 3a', 4a' on the respective graphic sign 7, 8.

Alternatively, drivers can press one of the portions 3b', 3b", 3b‴ in order to select a special thermal function, while the vehicle is running or is parked, which will automatically adjust the flow and the temperature according to the specific information stored in the control unit of the conditioning system.

Owing to the above, the advantages of a control system of a vehicle according to the invention are evident.

Thanks to the system disclosed herein, the conditioning system can be controlled in an extremely versatile manner in a compact space and with mechanical control systems, such as buttons or knobs, which, hence, are easy and economic to be manufactured.

More in detail, thanks to the specific shape of the vehicle represented on the central portion, it is extremely simple to understand which portion is controlled by the respective knob.

Moreover, thanks to the selection of special thermal functions, both when the vehicle is running and when it is parked, specific conditioning cycles can be activated with one single button, without having to carry out a manual adjustment.

Since the system comprises only two knobs, the conditioning system is extremely compact and can be installed in small spaces, besides being capable of replacing already existing systems.

Finally, the control system of the vehicle according to the invention can be subjected to changes and variants, which, though, do not go beyond the scope of protection set forth in the appended claims.

Clearly, the shape of the first and second mechanical knob regulator can be different. Similarly, the shape of the indicator portions and their number can be different.

As already mentioned above, the graphic signs change according to the shape of the cabin of the vehicle where the system is installed.

## Claims

1. A vehicle comprising a cabin provided with a control system (1) for managing the conditioning of said cabin, said control system (1) comprises a first and a second mechanical knob regulator (3, 4), each of said first and second mechanical knob regulators (3, 4) comprising a central portion (3b, 4b) and an annular portion (3a, 4a) rotating around the respective central portion (3b, 4b), each of said central portions (3b, 4b) being divided into several parts (3b', 3b", 3b‴, 4b', 4b", 4b‴) selectable by the user, each annular portion (3a, 4a) including at least one indicating portion (3a' , 4a') configured to indicate the relative angular position between said annular portion (3a, 4a) and the respective central portion (3b, 4b),
said parts (3b', 3b", 3b‴, 4b', 4b", 4b‴) and said annular portions (3a, 4a) being connected to a control unit of a conditioning system of said vehicle,
wherein said first mechanical knob regulator (3) is configured to control the temperature value of an air flow that can be supplied by said conditioning system and said second mechanical knob regulator (4) is configured to control the flow rate value of an air flow that can be supplied by said conditioning system,
**characterized in that**
the parts (4b', 4b", 4b‴) of said second mechanical knob regulator (4) are configured to select the area of said air flow, and said parts (4b', 4b", 4b‴) of said second mechanical knob regulator (4) are selectable individually or in combination.

2. Vehicle according to claim 1, wherein each indicating portion (3a', 4a') comprises a projection extending radially from the respective annular portion (3a, 4a) on the opposite side of the respective central portion (3b, 4b).

3. Vehicle according to claim 1 or 2, in which said parts (3b', 3b", 3b‴, 4b', 4b", 4b‴) are made on top of each other along a direction perpendicular to an axis (C) joining the centers of rotation (A, B) of said annular portions (3a, 4a).

4. Vehicle according to one of the preceding claims, comprising first graphic signs (5, 6) made on said central portions (3b, 4b), said first graphic signs (5, 6) representing in a stylized way said cabin of said vehicle.

5. Vehicle according to one of the preceding claims, comprising second graphic signs (7, 8) made around said annular portions (3a, 4a), said second graphic signs (7, 8) representing in a stylized way the intensity of a signal adjustable by means of said annular portions (3a, 4a).

6. Vehicle according to any of the preceding claims, in which the parts (3b', 3b", 3b‴) of said first mechanical knob regulator (3) are selectable only individually and are configured to activate special thermal functions of conditioning of the cabin of said vehicle, said special thermal functions of conditioning being stored in said control unit of said conditioning system.

7. Vehicle according to claim 6, wherein the parts (3b', 3b", 3b‴) of said first mechanical knob regulator (3) are selectable when said vehicle is parked to select further special thermal functions of conditioning of the cabin of said vehicle, said further special thermal functions of conditioning being memorized in said control unit of said conditioning system.

8. Vehicle according to one of the preceding claims, in which said system (1) comprises only said first and second mechanical knob regulators (3, 4), said first and second mechanical knob regulators (3, 4) being placed side by side with a distance of about 50 mm.

## Patentansprüche

1. Fahrzeug, umfassend eine Kabine mit einem Steuerungssystem (1) zur Handhabung der Klimatisierung der Kabine, welches Steuerungssystem (1) einen ersten und einen zweiten mechanischen Knopfregler (3, 4) umfasst, von denen jeder der ersten und zweiten mechanischen Knopfregler (3, 4) einen zentralen Teil (3b, 4b) und einen ringförmigen Teil (3a, 4a), welcher um den jeweiligen zentralen Teil (3b,4b) rotiert, umfasst, wobei jeder der zentralen Teile (3b,4b) in mehrere Teile (3b', 3b", 3b"', 4b', 4b", 4b‴) unterteilt ist, die von dem Benutzer anwählbar sind, und wobei jeder ringförmige Teil (3a, 4a) zumindest einen Anzeigeteil (3a', 4a') umfasst, dazu ausgebildet, die jeweilige Winkelposition zwischen dem ringförmigen Teil (3a, 4a) und dem jeweiligen zentralen Teil (3b, 4b) anzuzeigen,
welche Teile (3b', 3b", 3b"', 4b', 4b", 4b‴) und welche ringförmigen Teile (3a, 4a) mit einer Steuerungseinheit eines Klimatisierungssystems des Fahrzeugs verbunden sind,
wobei der erste mechanische Knopfregler (3) zur Steuerung des Temperaturwerts eines Luftstroms ausgebildet ist, der von dem Klimatisierungssystem erzeugt werden kann, und der zweite mechanische Knopfregler (4) dazu ausgebildet ist, den Volumenstromwert eines Luftstroms zu steuern, der von dem Klimatisierungssystem erzeugt werden kann,
**dadurch gekennzeichnet, dass** die Teile (4b', 4b", 4b‴) des zweiten mechanischen Knopfreglers (4) dazu ausgebildet sind, den Bereich des Luftstroms auszuwählen und die Teile (4b', 4b", 4b‴) des zweiten mechanischen Knopfreglers (4) einzeln oder in Kombination wählbar sind.

2. Fahrzeug gemäß Anspruch 1, bei welchem jeder Anzeigeteil (3a' ,4a') einen Vorsprung umfasst, der sich radial von dem jeweiligen ringförmigen Teil (3a, 4a) auf der gegenüberliegenden Seite des jeweiligen zentralen Teils (3b, 4b) erstreckt.

3. Fahrzeug gemäß Anspruch 1 oder 2, bei welchem die Teile (3b', 3b", 3b‴, 4b', 4b", 4b‴) übereinander entlang einer Richtung senkrecht zu einer Achse (C) ausgebildet sind, welche die Zentren der Drehung (A, B) der ringförmigen Teile (3a, 4a) schneidet.

4. Fahrzeug gemäß einem der vorhergehenden Ansprüche, umfassend erste grafische Zeichen (5, 6), die auf den zentralen Teilen (3b, 4b) ausgebildet sind, welche ersten grafischen Zeichen (5, 6) in stilisierter Weise die Kabine des Fahrzeugs darstellen.

5. Fahrzeug gemäß einem der vorhergehenden Ansprüche, umfassend zweite grafische Zeichen (7, 8), die um die ringförmigen Teile (3a, 4a) herum ausgebildet sind, welche zweiten grafischen Zeichen (7, 8) in stilisierter Weise die Intensität eines Signals repräsentieren, welches durch die ringförmigen Teile (3a, 4a) einstellbar ist.

6. Fahrzeug gemäß einem der vorhergehenden Ansprüche, bei welchem die Teile (3b', 3b", 3b‴) des ersten mechanischen Knopfreglers (3) lediglich einzeln wählbar sind und dazu ausgebildet sind, spezielle thermische Funktionen der Klimatisierung der Kabine des Fahrzeugs zu aktivieren, welche speziellen thermischen Funktionen der Klimatisierung in der Steuerungseinheit des Klimatisierungssystems gespeichert sind.

7. Fahrzeug gemäß Anspruch 6, bei welchem die Teile (3b', 3b", 3b‴) des ersten mechanischen Knopfreglers (3) wählbar sind, wenn das Fahrzeug geparkt ist, um weitere spezielle thermische Funktionen der Klimatisierung der Kabine des Fahrzeugs auszuwählen, welche weiteren speziellen thermischen Funktionen der Klimatisierung in der Steuerungseinheit des Klimatisierungssystems gespeichert sind.

8. Fahrzeug gemäß einem der vorherhergehenden Ansprüche, bei welchem das System (1) ausschließlich die ersten und zweiten mechanischen Knopfregler (3, 4) umfasst, welche ersten und zweiten mechanischen Knopfregler (3, 4) nebeneinander in einem Abstand von etwa 50 mm angeordnet sind.

## Revendications

1. Véhicule comprenant une cabine prévue avec un système de contrôle (1) pour gérer la climatisation de ladite cabine,
ledit système de contrôle (1) comprend un premier et un second régulateur de bouton mécanique (3,4), chacun desdits premier et second régulateurs de bouton mécanique (3, 4) comprenant une partie centrale (3b, 4b) et une partie annulaire (3a, 4a) tournant autour de la partie centrale (3b, 4b) respective, chacune desdites parties centrales (3b, 4b) étant divisée en plusieurs parties (3b', 3b", 3b''', 4b', 4b", 4b''') pouvant être sélectionnées par l'utilisateur, chaque partie annulaire (3a, 4a) comprenant au moins une partie d'indication (3a', 4a') configurée pour indiquer la position angulaire relative entre ladite partie annulaire (3a, 4a) et la partie centrale (3b, 4b) respective,
lesdites parties (3b', 3b", 3b''', 4b', 4b", 4b‴) et lesdites parties annulaires (3a, 4a) étant raccordées à une unité de commande d'un système de climatisation dudit véhicule,
dans lequel ledit premier régulateur de bouton mécanique (3) est configuré pour contrôler la valeur de température d'un flux d'air qui peut être fourni par ledit système de climatisation et ledit second régulateur de bouton mécanique (4) est configuré pour contrôler la valeur de débit d'un flux d'air qui peut être fourni par ledit système de climatisation,
**caractérisé en ce que** :
les parties (4b', 4b", 4b''') dudit second régulateur de bouton mécanique (4) sont configurées pour sélectionner la zone dudit flux d'air, et lesdites parties (4b', 4b", 4b‴) dudit second régulateur de bouton mécanique (4) peuvent être sélectionnées individuellement ou en combinaison.

2. Véhicule selon la revendication 1, dans lequel chaque partie d'indication (3a', 4a') comprend une saillie s'étendant radialement à partir de la partie annulaire (3a, 4a) respective sur le côté opposé de la partie centrale (3b, 4b) respective.

3. Véhicule selon la revendication 1 ou 2, dans lequel lesdites parties (3b', 3b", 3b‴, 4b', 4b'', 4b''') sont réalisées sur le dessus les unes des autres le long d'une direction perpendiculaire à un axe (C) assemblant les centres de rotation (A, B) desdites parties annulaires (3a, 4a).

4. Véhicule selon l'une des revendications précédentes, comprenant des premiers signes graphiques (5, 6) réalisés sur lesdites parties centrales (3b, 4b), lesdits premiers signes graphiques (5, 6) représentant, d'une manière stylisée, ladite cabine dudit véhicule.

5. Véhicule selon l'une des revendications précédentes, comprenant des seconds signes graphiques (7, 8) réalisés autour desdites parties annulaires (3a, 4a), lesdits seconds signes graphiques (7, 8) représentant, de manière stylisée, l'intensité d'un signal ajustable au moyen desdites parties annulaires (3a, 4a).

6. Véhicule selon l'une quelconque des revendications précédentes, dans lequel les parties (3b', 3b", 3b‴) dudit premier régulateur de bouton mécanique (3) peuvent être sélectionnées uniquement individuellement et sont configurées pour activer des fonctions thermiques spéciales de climatisation de la cabine dudit véhicule, lesdites fonctions thermiques spéciales de climatisation étant stockées dans ladite unité de contrôle dudit système de climatisation.

7. Véhicule selon la revendication 6, dans lequel les parties (3b', 3b", 3b‴) dudit premier régulateur de bouton mécanique (3) peuvent être sélectionnées lorsque ledit véhicule est stationné pour sélectionner d'autres fonctions thermiques spéciales de climatisation de la cabine dudit véhicule,
lesdites autres fonctions thermiques spéciales de climatisation étant mémorisées dans ladite unité de contrôle dudit système de climatisation.

8. Véhicule selon l'une des revendications précédentes, dans lequel ledit système (1) comprend uniquement lesdits premier et second régulateurs de bouton mécanique (3, 4), lesdits premier et second régulateurs de bouton mécanique (3, 4) étant placés côte à côte avec une distance d'environ 50 mm.
